# EUROPEAN PATENT APPLICATION

(11) **EP 4 440 203 A1**
(43) Date of publication of application: **02.10.2024**
(21) Application number: 22897594.2
(22) Date of filing: 07.11.2022
(51) Int. Cl.: H04W 52/02

(54) **ENERGY-SAVING CONTROL METHOD AND APPARATUS, STORAGE MEDIUM, AND PROGRAM PRODUCT**

(30) Priority: 26.11.2021 CN 202111422859
(71) Applicant: ZTE Corporation, Shenzhen Guangdong 518057 (CN)
(72) Inventor: YU, Susheng, Shenzhen, Guangdong 518057 (CN); ZHAO, Zhiyong, Shenzhen, Guangdong 518057 (CN); WANG, Xuehong, Shenzhen, Guangdong 518057 (CN)
(74) Representative: Zoli, Filippo
(86) International application number: PCT/CN2022/130320
(87) International publication number: WO 2023/093511

(57) **Abstract**

Disclosed in the present application are an energy-saving control method and apparatus, a storage medium, and a program product. The energy-saving control method is applied to an energy-saving control apparatus. The energy-saving control method comprises: acquiring antenna information of each channel in an active antenna unit (AAU) (S110); when the antenna information comprises antenna beamforming information, performing energy-saving decision processing according to the antenna beamforming information and a preset energy-saving strategy, so as to obtain a first operation control instruction (S120); and performing energy-saving control on the AAU by using the first operation control instruction (S130).

## Description

### CROSS-REFERENCE TO RELATED APPLICATION

This application is filed on the basis of the Chinese patent application No. 202111422859.8 filed November 26, 2021, and claims priority of the Chinese patent application, the entire contents of which are incorporated herein by reference.

### TECHNICAL FIELD

The present disclosure relates to the field of telecommunication, and in particular to a method for controlling energy-saving, a device, a storage medium, and a program product.

### BACKGROUND

Massive multiple input and multiple output (MIMO) base station systems generally include a Base Band Unit (BBU), a Massive MIMO Active Antenna Unit (AAU), and the corresponding base station network management system. In particular, AAU is massive MIMO equipment, which is the dominant product form for 5G New Radio (NR) networking. Compared with the traditional 4G Long Term Evolution (LTE) 8T8R (i.e., 8 transmitter links and 8 receiver links) RF Remote Radio Unit (RRU) equipment, AAU equipment consumes quite a bit more energy than RRU equipment. Hence, the energy demand of a site with the AAU equipment is also higher than that of a site with the RRU equipment. In addition, the bandwidth requirements of the 5G NR equipment are also several times larger than those of the LTE 4G equipment. The high energy consumption of equipment means that the equipment consumes a lot of electricity during operation. The electricity fee is higher for network operations of the site, and the actual operating cost of customers is higher. The higher operating cost somehow limits the willingness of clients to build new sites with AAU, which in turn restricts the development of 5G NR networks and the telecommunications industry.

In the related technologies, there are two commonly utilized energy-saving modes of AAU operation, i.e., the energy-saving mode of periodically shutting down some channels and the energy-saving mode of unified coarse optimization over all channels for energy-saving. For the former mode, after a channel is shut down, some adverse impact may occur. The success rate of RRC (Radio Resource Control) connection establishment would decrease. The success rate of RRC connection reestablishment would increase. The wireless connection rate would decrease. The wireless drop rate would increase. The average delay of the downlink Radio Link Control (RLC) Service Service Data Unit (SDU) would increase. The Media Access Control (MAC) layer downlink error block rate would increase. Downlink hybrid automatic retransmission technology retransmission ratio would increase. The rate where the Channel Quality Indicator (CQI) indicates good channel quality would decrease. The proportion of space division would decrease. The downlink rate would decrease, and so on. For the latter mode, the optimal power voltage of power devices on each channel can be estimated according to the power configuration, and the power voltage can be uniformly adjusted to allow the devices on each channel to operate at a better operating voltage. The time slot (or symbol) with no service at all can be detected and determined in real-time. For the time slot (or symbol) with no service, all channels are powered off in the time slot (or symbol). However, the shutdown of the time slot (or symbol) requires an accurate determination on current moment of service idle, which in turn poses a high requirement for software. Further, due to the trapping effect of power devices, frequent switching on or off of power devices according to time slots (or symbols) would lead to an unstable switching delay, or dissatisfaction with the switching delay requirements required by the protocol, which would in turn lead to the deterioration of performance. Hence, the switching off of time slots would lead to a significant increase in service delay and poor user experience.

### SUMMARY

The following is a summary of the subject matter described herein. This summary is not intended to limit the scope of protection of the claims.

Provided are a method for controlling energy-saving, a device, a storage medium, and a program product in some embodiments of the present disclosure.

According to an embodiment of the present disclosure, a method for controlling energy-saving is provided. The method is applied to a device for controlling energy-saving. The method includes, acquiring antenna information of each channel in an Active Antenna Unit (AAU); performing energy-saving decision processing according to antenna beam forming information and a preset energy-saving strategy, in response to an inclusion of the antenna beam forming information within the antenna information, to acquire a first operational control instruction; and performing energy-saving control to the AAU, by means of the first operational control instruction.

According to an embodiment of the present disclosure, a device for controlling-energy saving is provided. The device includes, a data acquisition unit, and an energy-saving decision unit; where the data acquisition unit is configured to acquire antenna information of each channel in an Active Antenna Unit (AAU); and the energy-saving decision unit is configured to perform energy-saving decision processing according to antenna beam forming information and a preset energy-saving strategy in response to an inclusion of the antenna beam forming information within the antenna information, to acquire a first operational control instruction, and to perform energy-saving control to the AAU by means of the first operational control instruction; the data acquisition unit is arranged in one of a network management system, a Base Band Unit (BBU), or the AAU; and the energy-saving decision unit is arranged in one of the network management system, the BBU, or the AAU.

According to an embodiment of the present disclosure, a device for controlling energy-saving is provided. The device includes a memory, a processor, and a computer program stored in the memory which, when executed by the processor, causes the processor to carry out the method as described above.

According to an embodiment of the present disclosure, a computer-readable storage medium is provided. The computer-readable storage medium stores a computer-executable instruction which, when executed by a processor causes the processor to carry out the method as described above.

According to an embodiment of the present disclosure, a computer program product is provided. The computer program product includes a computer program or a computer instruction stored in a computer-readable storage medium which, when executed by a processor of a computer device, causes the computer device to carry out the method as described above.

Other features and advantages of the present disclosure will be illustrated in the following description, and in part will be apparent from the description, or may be understood by practicing the present disclosure. The objects and other advantages of the present disclosure can be achieved and obtained by the structure particularly set forth in the description, claims, and drawings.

### BRIEF DESCRIPTION OF DRAWINGS

The drawings are intended to provide a further understanding of the technical scheme of the present disclosure, and constitute a part of the specification, and they are intended to illustrate the technical scheme of the present disclosure in conjunction with the embodiments of the present disclosure, but are not intended to limit the technical scheme of the present disclosure.
FIG. 1 depicts a schematic diagram showing the architecture of a base station in which a method for controlling energy-saving according to an embodiment of the present disclosure is carried out;
FIG. 2 depicts a schematic diagram showing an AAU according to an embodiment of the present disclosure;
FIG. 3 depicts a schematic diagram showing an AI-based power-saving device according to an embodiment of the present disclosure;
FIG. 4 depicts a flowchart showing a method for controlling energy-saving according to an embodiment of the present disclosure;
FIG. 5 depicts a flowchart showing sub-operations of operation S120 in FIG. 4;
FIG. 6 depicts a flowchart showing further sub-operations of operation S120 in FIG. 4;
FIG. 7 depicts a flowchart showing sub-operations of operation S210 in FIG. 5;
FIG. 8 depicts a flowchart showing sub-operations of operation S420 in FIG. 7;
FIG. 9 depicts a flowchart showing further sub-operations of operation S420 in FIG. 7;
FIG. 10 depicts a flowchart showing a method for controlling energy-saving according to another embodiment of the present disclosure;
FIG. 11 depicts a flowchart showing sub-operations of operation S710 in FIG. 10;
FIG. 12 depicts a flowchart showing sub-operations of operation S810 in FIG. 11;
FIG. 13 depicts a schematic diagram showing a device for controlling energy-saving according to an embodiment of the present disclosure;
FIG. 14 is a schematic diagram of an implementation of a device for controlling energy saving according to an embodiment of the present disclosure; and
FIG. 15 depicts a schematic diagram showing another device for controlling energy-saving according to an embodiment of the present disclosure.

### DETAILED DESCRIPTION

The purpose, technical scheme and advantages of the present disclosure will become apparent through the following description for various embodiments in conjunction with the drawings. It should be understood that the embodiments described here are intended for illustration but not limitation of the present disclosure.

It shall be noted that, although the logical sequences are shown in the flow chart, in some cases, the steps shown or described may be performed in a different order than the logical order shown in the flowcharts. It should be understood that in the description, the claims and the description of the drawings, the term a plurality (or plurality) means more than two; greater than, less than, exceeding, etc. shall be understood to exclude the number being referred to; and above, below, within, etc. shall be understood to include the number being referred to.

Provided are a method for controlling energy-saving, a device, a storage medium, and a program product in some embodiments of the present disclosure. Accordingly, the antenna information is acquired first. When the antenna information includes antenna beam forming information, energy-saving decision processing is carried out based on antenna beam forming information and preset energy-saving strategies to obtain the first operational control instruction. Finally, energy-saving control is performed on the AAU, by means of the first operational control instruction. That is, in contrast to the energy-saving mode of timing off some channels and the energy-saving mode of unified coarse tuning of channels in the related art, according to an embodiment of the present disclosure, the first operational control instruction adapted to the current situation is acquired based on the acquired antenna beam forming information by the device for controlling energy-saving, such that the AAU can perform energy-saving control according to the currently acquired antenna beam forming information. Therefore, the solution according to an embodiment of the present disclosure can optimize existing energy-saving methods, reduce equipment operation energy consumption, and reduce the impact on service experience without adding new hardware equipment.

Some embodiments of the present disclosure will be further illustrated with reference to the drawings.

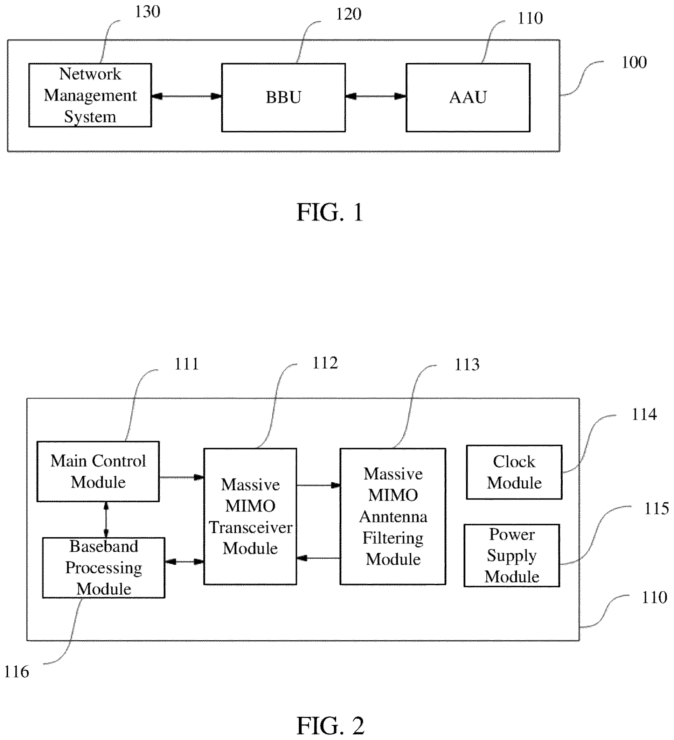

FIG. 1 depicts a schematic diagram showing the architecture of a base station in which a method for controlling energy-saving according to an embodiment of the present disclosure is carried out. As shown in FIG. 1, base station 100 includes a BBU 120, an AAU 110, and a network management system 130. The BBU 120 is arranged between the network management system 130 and the AAU 110, and the BBU 120 is communicatively connected with the network management system 130 and the AAU 110, respectively.

In an embodiment, BBU 120 receives the network management control signaling sent by the network management system 130. Upon receiving the network management control signaling, BBU 120 sends a downlink baseband signal to AAU 110, to instruct AAU 110 to process the received downlink baseband signal, and to transmit the processed downlink baseband signal to the air interface. Additionally, or alternatively, AAU 110 can also receive an uplink wireless signal over the air interface, process the uplink wireless signal, and then transmit the processed uplink wireless signal to BBU 120.

It should be noted that the network management system 130 can configure the BBU 120 and AAU 110, and realize the management and control of service performance. The BBU 120 and the AAU 110 may be connected through an enhanced common public radio interface (eCPRI).

It should be noted that the Common Public Radio Interface (CPRI) is a crucial communication interface specification between the radio equipment control center and the radio equipment in the cellular wireless network, which is widely employed in global mobile communication systems, third-generation wireless communication technologies, LTE, and 5G base station systems. The eCPRI protocol is an evolution of the CPRI protocol, which is carried on the Ethernet. ECPRI protocol is an interface protocol, through which a data transmission channel between BBU 120 and AAU 110 is established. The data transmitted over the channel includes control plane data, user plane data, and synchronization plane data.

It should also be noted that AAU 110 is a device that integrates RRU and antenna, while BBU 120 is generally the network interface unit and baseband processing unit of base station 100. AAU 110 can communicate with BBU 120 through an optical fiber channel and realize the transmission of uplink and downlink baseband signals with BBU 120.

FIG. 2 depicts a schematic diagram showing the architecture of an AAU according to an embodiment of the present disclosure. As shown in FIG. 2, AAU 110 includes a baseband processing module 116, a main control module 111, a massive multiple input and multiple output (MIMO) transceiver module 112, a massive MIMO antenna filtering module 113, a clock module 114, and a power module 115. The main control module 111 is connected with the massive MIMO transceiver module 112 and the baseband processing module 116. The massive MIMO antenna filtering module 113 is connected with the massive MIMO transceiver module 112. The baseband processing module 116 is connected with the BBU 120.

It should be noted that the power module 115 is configured to supply power to each component within the AAU 110. The clock module 114 is configured to provide clock signals for each component within the AAU 110.

In an embodiment, AAU 110 receives the downlink baseband signal sent by BBU 120, and performs signal processing to the downlink signal, such as digital intermediate frequency (IF) processing, digital-to-analog conversion processing, frequency conversion processing, small signal processing, power amplification processing, filtering processing, or the like, by means of the modules of the AAU 110, such as the digital IF transceiver module, the multi-channel input/output RF channel link module, extremely large-scale array antenna module, and transmits the processed signal to the air interface through extremely large-scale array antenna module as downlink radio signal. AAU 110 utilizes its own extremely large-array antenna module to receive uplink wireless signals from the air interface, and utilizes its own modules, such as multi-channel input/output RF channel link modules, and digital intermediate frequency receivers, to achieve filtering, amplification, frequency switching, and digital intermediate frequency reception of uplink wireless signals, and generates and transmits uplink baseband signals to BBU 120.

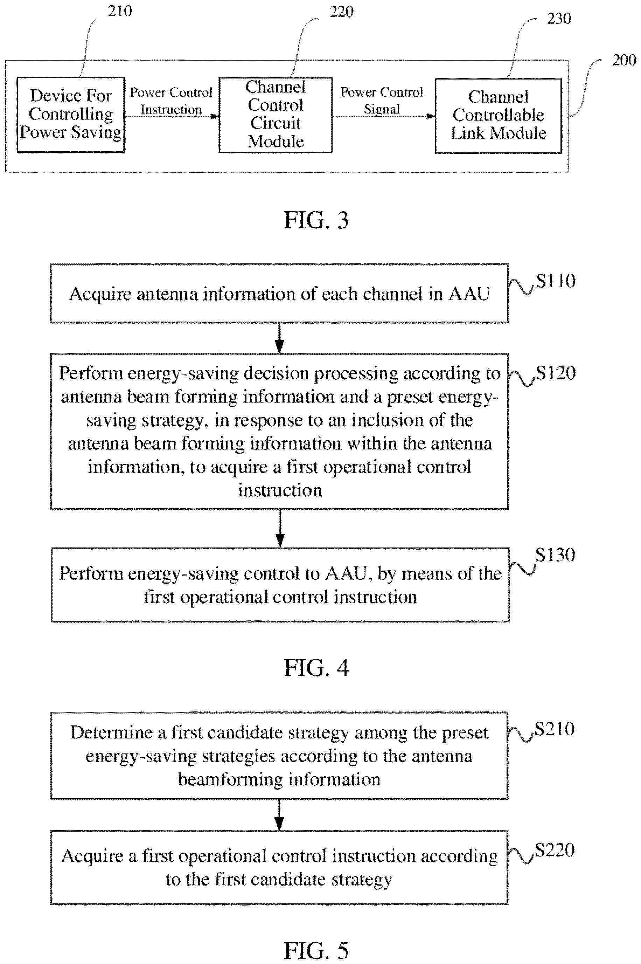

Based on the base station 100 shown in FIG. 1, an Artificial Intelligence (AI) based energy-saving apparatus 200 is provided according to an embodiment of the present disclosure. As shown in FIG. 3, the AI-based energy-saving apparatus 200 includes a device for controlling energy-saving 210, a channel control circuit module 220, and a channel controllable link module 230. The channel control circuit module 220 is communicatively connected with the device for controlling energy-saving 210 and the channel controllable link module 230, respectively.

The device for controlling energy-saving 210 is configured to acquire antenna information of each channel in the AAU, and perform energy-saving decision processing according to antenna beam forming information and a preset energy-saving strategy in response to an inclusion of the antenna beam forming information in the antenna information, to obtain a first operational control instruction, and send the first operational control instruction to the channel control circuit module 220. The device for controlling energy-saving 210 is further configured to perform energy-saving decision processing according to the power configuration information and the preset energy-saving strategy, in response to an inclusion of the power configuration information of the AAU within the antenna information, to obtain a second operational control instruction, and send the second operational control instruction to the channel control circuit module 220. In an implementation, the antenna beam forming information can be antenna weight information or other information, and the present disclosure is not limited thereto. In an example where the antenna beam forming information is the antenna weight information, the channel power revision value of the antenna can be calculated according to the antenna weight information, and then the energy-saving decision processing is carried out by means of the channel power revision value and the preset energy-saving strategy to obtain the first operational control instruction.

The channel control circuit module 220 is configured to receive the first operational control instruction or the second operational control instruction from the device for controlling energy-saving 210, generate a corresponding energy-saving control signal according to the first operational control instruction or the second operational control instruction, and then send the energy-saving control signal to the channel controllable link module 230. It should be noted that the channel control circuit module 220 receives the first operational control instruction or the second operational control instruction, and then generates and outputs a corresponding energy-saving control signal according to the first operational control instruction or the second operational control instruction, which may be a channel off signal, a channel on signal, a channel optimizing signal, a channel wake-up signal, or a channel sleep signal. It should be noted that a channel includes a transmission channel, a receiving channel, or a digital intermediate frequency channel, or the like. A channel off signal includes a transmission channel off signal or a receiving channel off signal. A channel optimizing signal includes an optimizing signal for operating parameters such as transmission channel voltage and matching parameters. A channel sleep signal includes a digital intermediate frequency channel sleep signal, or a digital intermediate frequency channel wake-up signal, or the like, and the present disclosure is not limited thereto.

The channel controllable link module 230 is configured to receive the energy-saving control signal from the channel control circuit module 220, and perform energy-saving control on the AAU 110 according to the energy-saving control signal. For example, the digital logic module of the digital intermediate frequency module of the channel controllable link module 230 can enable/disable sleep according to the carrier channel respectively under the channel wake-up signal or the channel sleep signal generated by the channel control circuit module 220. Each receiving channel or transmission channel of the channel controllable link module 230 can realize channel power-on for activation and operation, or channel power-off for deactivation and shut down respectively under the channel on signal or channel off signal generated by the channel control circuit module 220. The power device of each transmitting channel of the channel controllable link module 230 can respectively realize the optimal adjustment of channel voltage and matching parameters under the channel optimizing signal generated by the channel control circuit module 220, so that the power devices can operate at the highest efficiency.

It should be noted that different components in the device for controlling energy-saving 210 can be distributed in any one or more of the network management system 130, BBU 120, or AAU 110, and which is not specifically limited here.

It should be noted that the first operational control instruction or the second operational control instruction may include a channel on/off instruction, a channel sleep/wake instruction, a channel optimizing instruction, or the like. The channel includes a transmission channel, a receiving channel, a digital intermediate frequency channel, or the like. The channel on/off instruction includes a transmission channel on/off instruction and a receiving channel on/off instruction, or the like. The channel optimizing instruction includes an optimizing instruction for operating parameters such as a transmission channel operating voltage and a matching parameter. The channel sleep/wake instruction includes a digital intermediate frequency channel sleep/wake-up instruction, or the like, and the present disclosure is not limited thereto.

It should be noted that the device for controlling energy-saving 210 can communicate with relevant interactive units in the massive MIMO system environment. In an example, the device for controlling energy-saving can acquire antenna beam forming information sent by the AAU in the massive MIMO system, process the antenna beam forming information to obtain a corresponding first operational control instruction, and then send the first operational control instruction to the AAU to achieve control of energy-saving of the AAU.

It should also be noted that the device for controlling energy-saving 210, the channel control circuit module 220 and the channel controllable link module 230 in the AI-based energy-saving apparatus 200 can be flexibly added, eliminated or adjusted according to practical application requirements, to adapt to the diversity of smart energy-saving requirements of massive MIMO AAU devices based on the AI-based beam forming algorithm in wireless communication systems. As such, effective energy saving is achieved and the adverse impact on service experience is reduced.

In an embodiment, when the first operational control instruction is the n-th transmission channel off instruction, the channel control circuit module 220 receives the n-th transmission channel off instruction from the device for controlling energy-saving 210, generates the n-th transmission channel off signal according to the first operational control instruction, and then sends the n-th transmission channel off signal to the n-th transmission channel of the channel controllable link module 230. The channel controllable link module 230 receives the n-th transmission channel off signal from the channel control circuit module 220, and then turns the state of n-th transmission channel of the AAU 110 to the off state according to the channel off signal. In this way, the power-down and energy saving of the n-th transmission channel is achieved. It is possible to turn on the n-th transmission channel of the AAU110 for operation according to the first operational control instruction for activating the n-th transmission channel. Therefore, each channel can be independently turned off/on according to the corresponding first operational control instruction. It should be noted that a channel includes a transmission channel, or a receiving channel. Such an operation and control mechanism provides a method for the corresponding preset energy-saving strategy.

In an embodiment, when the second operational control instruction is a channel optimizing instruction, the channel control circuit module 220 receives the channel optimizing instruction from the device for controlling energy-saving 210, generates a corresponding channel optimizing signal and a channel optimizing target value according to the second operational control instruction, and then sends the channel optimizing signal and the channel optimizing target value to the channel controllable link module 230. The channel controllable link module 230 receives the channel optimizing signal and the channel optimizing target value from the channel control circuit module 220, and then performs energy-saving control on the AAU 110 according to the channel optimizing signal and the channel optimizing target value. It should be noted that the operating state parameters of the channel that can be optimized, include one or more parameters such as the drain voltage and gate voltage of the power amplifier and the output matching state of the final power amplifier, and the present disclosure is not limited thereto. When the drain voltage/gate voltage of the power amplifier is optimized according to the channel optimizing instruction, the dynamic efficiency of the power amplifier can be improved, and the dynamic power consumption can be reduced. When the output matching state of the final power amplifier is optimized according to the channel optimizing instruction, the output power reflection loss can be reduced, and the power transmission efficiency can be improved. In addition, the power amplifier can be deactivated by adjusting the gate voltage of the power amplifier to the extreme value, such that, the power consumption of the power amplifier is the minimum. In a word, by optimizing the relevant operating parameters of power devices such as power amplifiers on the channel, the operating efficiency of the channel is better at the current power and frequency, thus realizing energy saving.

In an embodiment, when the first operational control instruction is the digital IF channel sleep/wake instruction for the m-th carrier of the n-th channel, the channel control circuit module 220 receives the digital IF channel sleep/wake instruction from the device for controlling energy-saving 210, generates a digital IF module enable/disable signal corresponding to the m-th carrier of the n-th channel according to the first operational control instruction, and then sends the digital IF module enable/disable signal to the module in the channel controllable link module 230 where the m-th carrier of the n-th channel is located. The channel controllable link module 230 receives the enable/disable signal of the digital intermediate frequency module from the channel control circuit module 220, and then transitions the digital intermediate frequency module where the m-th carrier of the n-th channel of the AAU 110 are located to the sleep/wake state according to the enable/disable signal of the digital intermediate frequency module. As such the channel core digital logic module is disabled to sleep or enabled to operate, thus realizing the effective utilization of power consumption as needed quickly.

The base station and application scenarios described in an embodiment of the present disclosure are intended for a better understanding of rather than limitations to the technical scheme of various embodiments of the present disclosure. It is known to a person having ordinary skills in the art that, with the evolution of the architecture of the base station and the emergence of new application scenarios, the technical scheme provided by the embodiment of the present disclosure is also applicable to similar technical problems.

It can be understood by a person having ordinary skills in the art that the base station shown in FIG. 1, the AAU 110 shown in FIG. 2, and the AI-based energy saving apparatus 200 shown in FIG. 3 does not constitute a limitation to the embodiments of the present disclosure, and may include more or less components than those shown, or some components may be combined, or have different arrangements of components.

Based on base station 100, several embodiments of the method for controlling energy-saving are illustrated below.

FIG. 4 depicts a flowchart showing a method for controlling energy-saving according to an embodiment of the present disclosure. The method can be applied to a device for controlling energy-saving, such as the device for controlling energy-saving 210 in the AI-based energy-saving apparatus 200 shown in FIG. 3. The method may include, but is not limited to, operations S 110, S120, and S 130.

At operation S110, antenna information of each channel in AAU is acquired.

At operation S120, energy-saving decision processing is performed according to antenna beam forming information and a preset energy-saving strategy, in response to an inclusion of the antenna beam forming information within the antenna information, to acquire a first operational control instruction.

In this operation, when the antenna information includes antenna beam forming information, energy-saving decision processing is performed according to the obtained antenna beam forming information and the preset energy-saving strategy to obtain the first operational control instruction. In this way, the energy saving control on the AAU can be achieved by the first operational control instruction in subsequent operations.

It should be noted that the antenna beam forming information can be obtained directly from the beam forming module of BBU with different implementations. Alternatively, the device for controlling energy-saving can obtain the antenna beam-forming information through the network management system, or can obtain the antenna beam forming information through AAU, and the present disclosure is not limited thereto. It should also be noted that the antenna beam forming information includes at least antenna weight information, and can also include the operating frequency information of AAU, and the present disclosure is not limited thereto.

It should be noted that by performing the energy-saving decision processing based on the antenna beam forming information and the preset energy-saving strategy, the first operational control instruction can be acquired. The first operational control instruction may relate to channel off, or channel on. The first operational control instruction may also relate to the operating voltage optimization target value of each transmission channel power device, or the power supply shutdown of the transmission channel. The first operational control instruction may also relate to the optimal efficiency of each channel power device under the respective optimized operating voltage. The present disclosure is not limited thereto. For example, in case that the channel power revision value revised by the antenna beam forming weight is not greater than the channel power threshold, the first operational control instruction of turning off the channel is enabled for the corresponding channel. Alternatively, in case that the channel power revision value is greater than the channel power threshold, the first operational control instruction of channel optimizing is enabled for the corresponding channel, and the present disclosure is not limited thereto.

It should be noted that the preset energy-saving strategy can be a table made according to the historical antenna beam forming information. In an example, a preset energy-saving strategy includes table name, field identification and index value. In addition, the preset energy-saving strategy can be updated, and the present disclosure is not limited thereto.

At operation S130, energy-saving control is performed to AAU, by means of the first operational control instruction.

In this operation, the energy saving control on the AAU can be achieved by means of the first operational control instruction obtained in S120. The AAU can be flexibly controlled according to the practical application requirements, so as to adapt to the diversity of energy-saving requirements and effectively save energy.

In this embodiment, according to operations 5110 to S130 described above, after obtaining the antenna information of each channel in AAU, when the antenna information includes antenna beam forming information, firstly, energy-saving decision processing is performed according to the antenna beam forming information and the preset energy-saving strategy to obtain the first operational control instruction. Then, the energy saving control on the AAU is achieved by the first operational control instruction. That is, in contrast to the energy-saving mode of timing off some channels and the energy-saving mode of unified coarse tuning of channels in the related art, according to an embodiment of the present disclosure, the first operational control instruction adapted to the current situation is acquired based on the currently acquired antenna beam forming information, such that the AAU can perform energy-saving control according to the currently acquired antenna beam forming information. Therefore, the AAU is enabled to perform energy-saving control based on the currently obtained antenna beam forming information. Therefore, the scheme according to an embodiment of the present disclosure can flexibly implement energy-saving control on AAU according to practical application requirements without adding new hardware equipment, in order to adapt to the diversity of energy-saving needs, effectively achieve energy-saving, optimize existing energy-saving methods, reduce equipment operation energy consumption, and reduce the impact on service experience.

It should be noted that the energy-saving control on the AAU can be achieved by adjusting the operation mode of the AAU. In an implementation, the operation mode of the AAU includes channel off mode, channel on mode, digital IF channel sleep mode, digital IF channel wake-up mode, operating voltage optimizing mode of the channel power amplifier, and load matching optimizing mode of the channel power amplifier.

In an embodiment, as shown in FIG. 5, operation S120 includes but is not limited to operation S210 and operation S220.

At operation S210, a first candidate strategy is determined among the preset energy-saving strategies according to the antenna beam forming information.

In this operation, when the device for controlling energy-saving performs energy-saving decision processing according to the antenna beam forming information and the preset energy-saving strategies, and obtains the first operational control instruction, the device for controlling energy-saving can first determine the first candidate strategy among the preset energy-saving strategies according to the antenna beam forming information. In this way, in the subsequent operations, the control instruction can be acquired according to the first candidate strategy.

It should be noted that the antenna beam forming information may include the time when the antenna beam forming information was generated, the carrier carrying the antenna beam forming information, and other information, and the present disclosure is not limited thereto.

At operation S220, a first operational control instruction is acquired according to the first candidate strategy.

In this operation, the first operational control instruction can be obtained according to the first candidate strategy previously obtained in S210. In this way, energy-saving control can be performed on the AAU by means of the first operational control instruction in the subsequent operations.

In this embodiment, according to the operations S210 and S220 as described above, the device for controlling energy-saving can determine the first candidate strategy among the preset energy-saving strategies according to the antenna beam forming information, and then obtain the first operational control instruction according to the first candidate strategy. As such, in the subsequent steps, energy-saving control on the AAU can be achieved according to the control instruction, so as to adapt to the diversity of AI energy-saving requirements of the AAU.

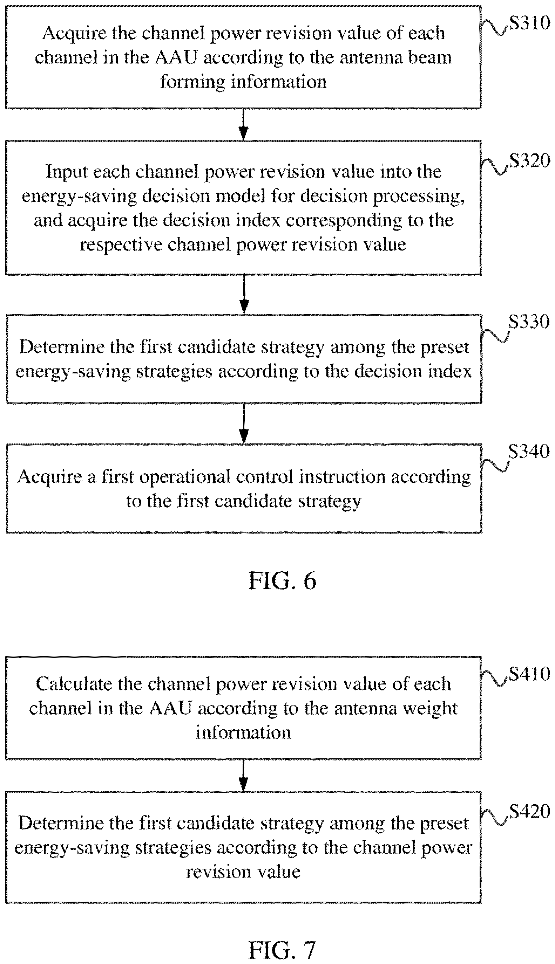

In an embodiment, as shown in FIG. 6, operation S120 includes but is not limited to operation S310, operation S320, operation S330, and operation S340.

At operation S310, the channel power revision value of each channel in the AAU is acquired according to the antenna beam forming information.

At operation S320, each channel power revision value is input into the energy-saving decision model for decision processing, and the decision index corresponding to the respective channel power revision value is acquired.

In this operation, since the channel power revision value of each channel in AAU is obtained according to the antenna beam forming information in previous operation S310, the device for controlling energy-saving can input each channel power revision values into the energy-saving decision model for decision processing, and obtain a respective decision index corresponding to each channel power revision value.

At operation S330, the first candidate strategy is determined among the preset energy-saving strategies according to the decision index.

In this operation, after the decision index is obtained in the previous operation S320, the device for controlling energy-saving can determine the first candidate strategy among the preset energy-saving strategies according to the decision index. As such, in the subsequent steps, the first operational control instruction can be acquired according to the first candidate strategy.

At operation S340, a first operational control instruction is acquired according to the first candidate strategy.

In this operation, the first operational control instruction can be obtained according to the first candidate strategy previously obtained in S330. In this way, in the following steps, energy-saving control can be performed on the AAU by means of the first operational control instruction.

In this embodiment, according to the operations S310 to S340 described above, the device for controlling energy-saving first obtains the channel power revision value of each channel in the AAU according to the antenna beam forming information, then inputs the channel power revision value of each channel in the AAU to the energy-saving decision model for decision processing to obtain a decision index corresponding to the respective channel power revision value. Then, the device determines the first candidate strategy among the preset energy-saving strategies according to the decision index. Finally, the device acquires the first operational control instruction according to the first candidate strategy. As such, energy-saving control on AAU can be performed according to the control instruction to adapt to the diversity of AI energy-saving requirements of the AAU in subsequent operations.

It should be noted that this embodiment is an extended scheme for determination by means of an AI-based model. In an example where the antenna beam forming information is the antenna distribution weight of the antennas of each transmission channel of AAU, the target power revised is acquired according to the antenna distribution weight. The target power is input into the energy-saving decision model, to acquire the decision index corresponding to the target power. Then the first candidate strategy is determined among the preset energy-saving strategies according to the target power. The first candidate strategy is to turn off each transmission channel whose configuration power is less than the channel power threshold.

In an embodiment, as shown in FIG. 7, in the case where the antenna beam forming information includes antenna weight information, operation S210 includes but is not limited to operation S410 and operation S420.

At operation S410, the channel power revision value of each channel in the AAU is calculated according to the antenna weight information.

In this operation, in case that the antenna beam forming information includes antenna weight information, when the first candidate strategy is to be determined, the channel power revision value of each channel in AAU can be calculated according to the antenna weight information, so that the first candidate strategy can be determined among the preset energy-saving strategies by means of the channel power revision value in subsequent steps, which is beneficial to quickly obtaining the first candidate strategy and improving the accuracy of the first candidate strategy.

It should be noted that the antenna weight information can be an antenna weight distribution of the antennas of each channel in the AAU generated by base station beam forming, or other information, and the present disclosure is not limited thereto. The channel power revision value can be a power distribution value of each channel in the AAU or other power values, and the present disclosure is not limited thereto.

At operation S420, the first candidate strategy is determined among the preset energy-saving strategies according to the channel power revision value.

In this operation, since the channel power revision value is obtained in the previous operation S410, the first candidate strategy can be determined among the preset energy saving strategies according to the channel power revision value, and then smart energy saving based on beam forming AI algorithm can be performed according to the first candidate strategy.

In this embodiment, according to operations S410 and S420 described above, the device for controlling energy-saving can first calculate the channel power revision value of each channel in the AAU according to the antenna weight information, and then determine the first candidate strategy among the preset energy-saving strategies according to the channel power revision value.

It should be noted that the first candidate strategy may include a channel off strategy, a channel on strategy, a digital IF channel sleep strategy, a digital IF channel wake-up strategy, a channel power amplifier operating voltage optimizing strategy, or a channel power amplifier load matching optimizing strategy, etc., and the present disclosure is not limited thereto. In an example, the antenna weight information is an antenna weight distribution of each channel antenna in the AAU generated by base station beam forming. In such a case, the channel power revision value of each channel in AAU is calculated according to the antenna weight distribution. The channel power revision values are the power distribution values. And then, the first candidate strategy is determined among the preset energy-saving strategies according to the power distribution values, so as to realize smart energy-saving based on AI-based beam-forming algorithm according to the first candidate strategy.

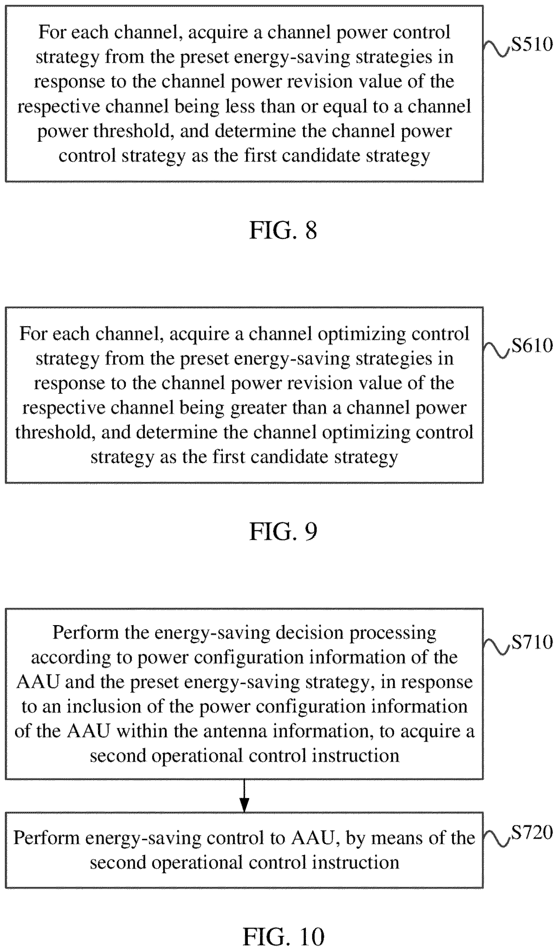

In an embodiment, as shown in FIG. 8, operation S420 includes but is not limited to operation S510.

At operation S510, for each channel, a channel power control strategy is obtained from the preset energy-saving strategies in response to the channel power revision value of the respective channel being less than or equal to a channel power threshold, and the channel power control strategy is determined as the first candidate strategy.

In this operation, in case where the antenna beam forming information includes antenna weight information, and since the channel power revision value is obtained in the previous operation S410, the channel power revision value can be judged. When the channel power revision value is less than or equal to the channel power threshold, the channel power control strategy is obtained among the preset energy-saving strategies, and the channel power control strategy is determined as the first candidate strategy. In this way, independent power-on for operation and power-off for energy saving of individual channels are achieved according to the first candidate strategy, and the smart power-off for energy saving is also achieved based on the AI-based beam-forming algorithm.

It should be noted that the channel power threshold can be 20dB less than the AAU configuration channel average power, 30dB less than the AAU configuration channel average power, or other values, and the present disclosure is not limited thereto. In an example, the channel power threshold is 20dB less than the AAU configuration channel average power, and the channel power revision value of the n-th channel after being revised by the beam forming antenna weight is 25dB less than the AAU configuration channel average power. That is, the channel power revision value is less than the channel power threshold. Thus, a channel power control strategy for independently controlling the power off of the n-th channel power supply can be given in the preset energy-saving strategy. The channel power control strategy for controlling the turn-on of the n-th channel power supply is re-decided when it is detected that the channel power revision value revised by the beam-forming antenna weight is recovered to be greater than the power threshold by more than 2dB (slightly greater than the power threshold, so as to avoid the unstable control caused by repeated decision when the channel power revision value approaches the power threshold).

It should also be noted that the channel power control strategy can be a channel off strategy, a channel on strategy, or the like, and the present disclosure is not limited thereto.

In an embodiment, as shown in FIG. 9, operation S420 includes but is not limited to operation S610.

At operation S610, for each channel, a channel optimizing control strategy is obtained from the preset energy-saving strategies in response to the channel power revision value of the respective channel being greater than a channel power threshold, and the channel optimizing control strategy is determined as the first candidate strategy.

In this operation, in case where the antenna beam forming information includes antenna weight information, since the channel power revision value is obtained in the previous operation S410, the channel power revision value can be judged. When the channel power revision value is greater than the channel power threshold, a channel optimizing control strategy is obtained from the preset energy-saving strategies. The channel optimizing control strategy is determined as the first candidate strategy. According to the first candidate strategy, the operating voltage of power devices in most transmission channels can be adjusted to the optimal level independently. As such, the operating efficiency of power devices can reach the optimal level, and then the smart optimization of operating parameters of channels based on AI-based beam-forming algorithm can be realized for energy saving.

It should be noted that the channel power revision value can be the channel target power after being revised through the beam-forming antenna weight, and the present disclosure is not limited thereto.

It should be noted that the channel power threshold can be 20dB less than the AAU configuration channel average power, 30dB less than the AAU configuration channel average power, or other values, and the present disclosure is not limited thereto. In an example, the channel power threshold is 20dB less than the AAU configuration channel average power, and the actual power of the n-th channel after being revised through the beam-forming antenna weight is 10dB less than the AAU configuration channel average power. This is, the actual power is greater than the channel power threshold. Hence, the channel optimizing control strategy for controlling the voltage of the n-th channel can be obtained in the preset energy-saving strategies. The optimizing control strategy is to independently adjust the operating voltage of the power device of the n-th transmission channel, so that the power device can operate optimally at the corresponding power, thereby realizing energy saving.

In an example where the antenna weight information is the antenna weight distribution of each channel antenna in AAU generated by base station beam forming, the channel power configuration information of the AAU obtained from the AAU can be revised according to the antenna weight distribution, so that the channel power revision value of each channel in the AAU can be obtained. The channel power revision value is compared with the channel power threshold to obtain a comparison result. Then energy-saving decision processing is carried out according to the comparison result and a preset energy-saving strategy. The first candidate strategy is determined among the preset energy-saving strategies. The first operational control instruction is acquired according to the first candidate strategy. As such each channel in the AAU is adjusted according to the first operational control instruction, and further energy saving is thus achieved.

It should also be noted that the channel optimizing control strategy can be an optimizing control strategy that independently adjusts the operating voltage of the power device of part of the transmission channels to reach the optimal value, or an optimizing control strategy of other channels, or the like, and the present disclosure is not limited thereto. In an implementation, the channel optimizing control strategy of independently adjusting the operating voltage of power devices of part of transmission channels can be to independently adjust the operating voltage of the drain of power devices of part of transmission channels to reach the optimal value, or to independently adjust the operating voltage of the gate of power devices of part of transmission channels to reach the optimal value, or the like, and the present disclosure is not limited thereto.

In an embodiment, as shown in FIG. 10, the method for controlling energy-saving further includes, but is not limited to, operation S710 and operation S720.

At operation S710, the energy-saving decision processing is performed according to the power configuration information of the AAU and the preset energy-saving strategy, in response to an inclusion of the power configuration information of the AAU within the antenna information, to acquire a second operational control instruction.

In this operation, when the antenna information includes the power configuration information of the AAU, energy-saving decision processing can be performed according to the obtained power configuration information and the preset energy-saving strategy to obtain a second operational control instruction. As such, the second operational control instruction can be employed to realize energy-saving control of the AAU in subsequent steps.

At operation S720, energy-saving control is performed to AAU, by means of the second operational control instruction.

In this operation, energy-saving control on the AAU can be performed by means of the second operational control instruction obtained in operation S710. The AAU can be flexibly controlled according to the practical application requirements, so as to adapt to the diversity of energy-saving requirements and effectively save energy.

In this embodiment, according to operations S710 to S720 described above, after obtaining the antenna information of each channel in AAU, when the antenna information includes power configuration information of AAU, firstly, energy-saving decision processing is performed according to the power configuration information of AAU and the preset energy-saving strategy to obtain the second operational control instruction. Then, energy-saving control on the AAU is performed by the second operational control instruction. That is, in contrast to the energy-saving mode of timing off some channels and the energy-saving mode of unified coarse tuning of channels in the related art, according to an embodiment of the present disclosure, the second operational control instruction adapted to the current situation is acquired based on the currently acquired power configuration information of AAU, such that the AAU can perform energy-saving control according to the currently acquired power configuration information of AAU. Therefore, the scheme according to an embodiment of the present disclosure can flexibly implement energy-saving control on AAU according to practical application requirements without adding new hardware equipment, in order to adapt to the diversity of energy-saving needs, effectively achieve energy-saving, optimize existing energy-saving methods, reduce equipment operation energy consumption, and reduce the impact on service experience.

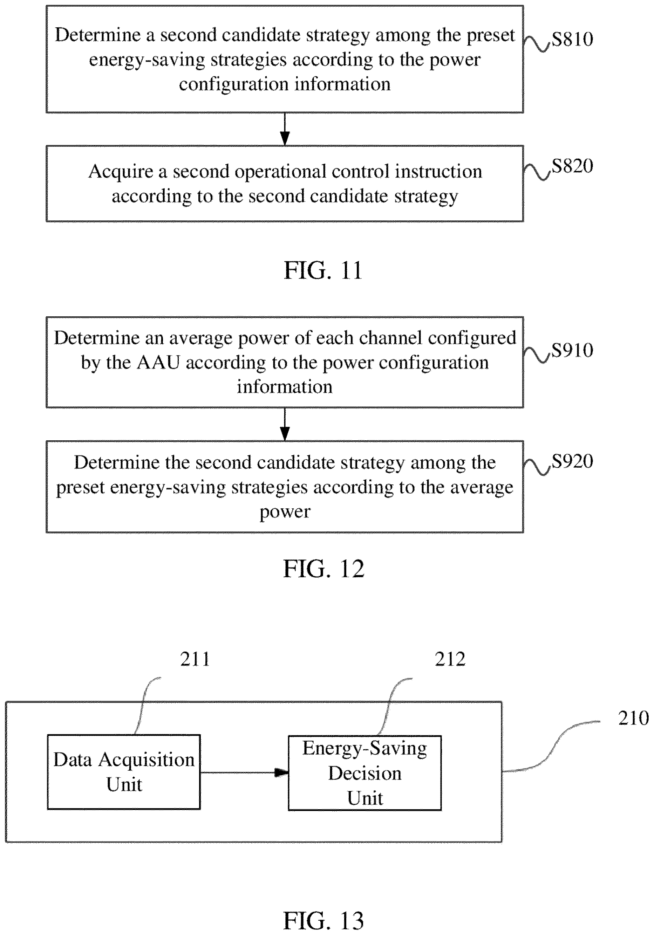

In an embodiment, as shown in FIG. 11, operation S710 includes but is not limited to operation S810 and operation S820.

At operation S810, a second candidate strategy is determined among the preset energy-saving strategies according to the power configuration information.

In this operation, when the device for controlling energy-saving performs energy-saving decision processing according to the power configuration information and the preset energy-saving strategies, and obtains the second operational control instruction, the device for controlling energy-saving can first determine the second candidate strategy among the preset energy-saving strategies according to the power configuration information. In this way, in the subsequent operations, the control instruction can be acquired according to the second candidate strategy.

It should be noted that the power configuration information may include the time when the power configuration information was generated, the carrier carrying the power configuration information and other information, which are not exhausted here.

At operation S820, a second operational control instruction is acquired according to the second candidate strategy.

In this operation, the second operational control instruction can be obtained according to the second candidate strategy previously obtained in S810. In this way, energy-saving control can be performed on the AAU by means of the second operational control instruction in the subsequent operations.

In this embodiment, according to the operations S810 and S820 as described above, the device for controlling energy-saving can determine the second candidate strategy among the preset energy-saving strategies according to the power configuration information, and then obtain the second operational control instruction according to the second candidate strategy. As such, in the subsequent steps, energy-saving control on the AAU can be achieved according to the control instruction, so as to adapt to the diversity of AI energy-saving requirements of the AAU.

In an embodiment, as shown in FIG. 12, operation S810 includes but is not limited to operation S910 and operation S920.

At operation S910, an average power of each channel configured by the AAU is determined according to the power configuration information.

In this operation, in case where the antenna information includes the power configuration information of the AAU, and when the second candidate strategy is to be determined, the average power of each channel in the AAU can be determined according to the power configuration information. As such, in the subsequent operation, the second candidate strategy can be determined among the preset energy-saving strategies by means of the average power. In this operation, the average power of each channel in the AAU can be dynamically determined, so as to determine the second candidate strategy timely according to the average power.

It should be noted that the power configuration information may be the sum of the power of all carrier configurations of AAU.

It should also be noted that the power configuration information can be the configured power directly queried from the AAU, and there are also different implementations. For example, the device for controlling energy-saving can directly query the current configuration power from the AAU, or query the power configuration information of all cells carried on the AAU from the network management system and BBU where the AAU is located, and the present disclosure is not limited thereto.

At operation S920, the second candidate strategy is determined among the preset energy-saving strategies according to the average power.

In this operation, since the average power of each channel in AAU is obtained in the previous operation S910, the second candidate strategy can be determined among the preset energy-saving strategies according to the average power. As such, the operational control instruction can be obtained in the subsequent operations according to the second candidate strategy, which is beneficial to realize the better operating state of the power amplifier of each channel according to the second candidate strategy, and further reduce the power consumption.

In this embodiment, according to the operations S910 and S920 as described above, the device for controlling energy-saving can first determine the average power of all transmission channels of the AAU according to the power configuration information, and then determine the second candidate strategy among the preset energy-saving strategies according to the average power, which is beneficial to the better efficiency of power amplifiers of all transmission channels under the optimized operating voltage. Thereby the power consumption is reduced, and the AI-based optimization and energy saving of power amplifier voltage are achieved.

It should be noted that the second candidate strategy may include the optimizing strategy of channel power amplifier operating voltage, the optimizing strategy of channel power amplifier load matching, and other strategies. The optimizing strategy of channel power amplifier operating voltage includes the optimizing strategy of transmission channel power device power amplifier average operating voltage. The optimizing strategy of channel power amplifier load matching includes the optimizing strategy of transmission channel power device power amplifier average load matching, and the present disclosure is not limited thereto. For example, the sum of the power of all cell configurations of the AAU is obtained, and the average power of all transmission channels of the AAU is determined according to the sum of the power of the AAU configuration. Then the optimizing target values of the operating voltages of power amplifiers of all transmission channels are determined in a preset energy-saving strategy according to the average power. It should also be noted that the optimizing target value may include the optimizing target value of the drain voltage of the power amplifier, the optimizing target value of the gate voltage of the power amplifier, and so on.

FIG. 13 depicts a schematic diagram showing a device for controlling energy-saving 210 according to an embodiment of the present disclosure. The device for controlling energy-saving 210 includes a data acquisition unit 211 and an energy-saving decision unit 212. The data acquisition unit 211 is configured to obtain antenna information of each channel in AAU 110. The energy-saving decision unit 212 is configured to perform energy-saving decision processing based on the antenna beam forming information and the preset energy-saving strategy when the antenna information includes antenna beam forming information to obtain the first operational control instruction, and to utilize the first operational control instruction to control the energy saving of AAU 110. That is, in contrast to the energy-saving mode of timing off some channels and the energy-saving mode of unified coarse tuning of channels in the related art, according to an embodiment of the present disclosure, the first operational control instruction adapted to the current situation is acquired based on the currently acquired antenna beam forming information, such that the AAU can perform energy-saving control according to the currently acquired antenna beam forming information. Therefore, the scheme according to an embodiment of the present disclosure can optimize existing energy-saving methods, reduce equipment operation energy consumption, and reduce the impact on service experience without adding new hardware equipment.

It should also be noted that the data acquisition unit 211 is arranged in any one of the network management system 130, BBU 120, or AAU 110. The energy-saving decision unit 212 is arranged in any one of the network management system 130, BBU 120, or AAU 110. The data acquisition unit 211 and the energy-saving decision unit 212 are flexibly deployed in the network management system 130, BBU 120, or AAU 110. The energy-saving decision unit 212 and the data acquisition unit 211 are flexibly and conveniently adjusted to realize energy-saving technologies including one or more combinations of AI-based channel turn-off for energy saving, power device operating voltage, and load matching AI based optimization for energy saving, so as to adapt to the diversity of AI-based energy-saving requirements of AAU 110.

It should also be noted that the device for controlling energy saving 210 realizes the AI based energy-saving function on the basis of the existing massive MIMO base station architecture and existing network networking. Hence, the deployment of the smart device for controlling energy saving 210 for massive MIMO AAU equipment based on AI based beam forming algorithm is relatively low in hardware cost, engineering construction and maintenance cost.

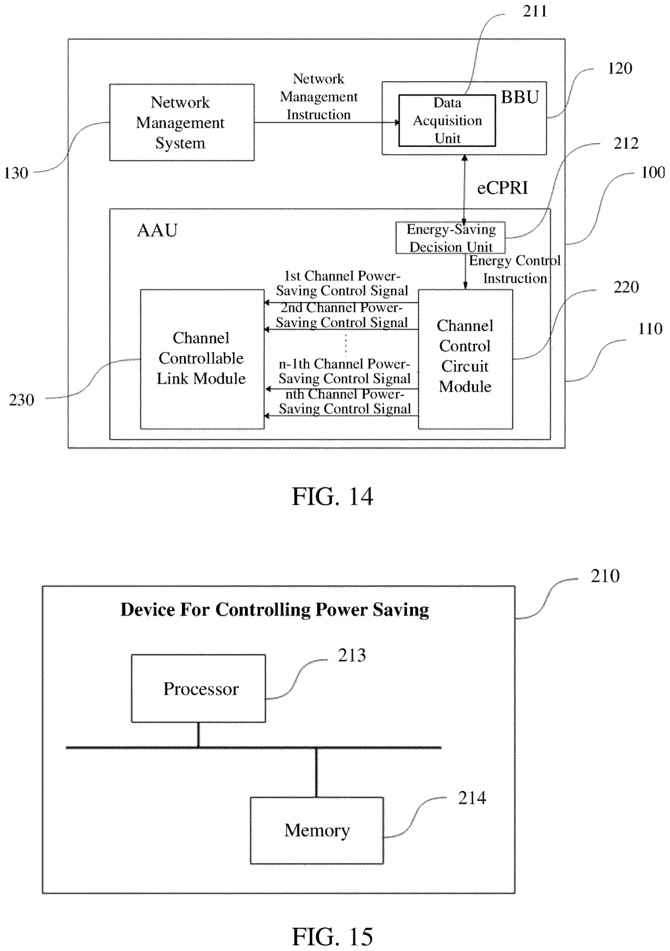

In an embodiment, as shown in FIG. 14, the data acquisition unit 211 is arranged in BBU 120 and the energy-saving decision unit 212 is arranged in AAU 110. In such a case, BBU 120 receives the network management instruction from the network management system 130, recognizes that the network management instruction contains the AI based beam forming smart energy-saving strategy, and starts the data acquisition unit 211 to monitor the antenna weight information from the beam forming module of BBU 120. BBU 120 then determines the power value of each channel revised by the antenna weight in the sector where AAU 110 is located according to the antenna weight information, and sends the antenna weight information to AAU 110 through eCPRI. Energy-saving decision unit 212 in AAU 110 revises the average power of each channel in AAU according to the received antenna weight information to obtain the revised power value of each channel. Each channel power revision value and the preset energy-saving strategy are subjected to energy-saving decision processing to obtain an operational control instruction. AAU 110 sends the operational control instruction to the channel control circuit module 220 of AAU 110, such that the channel control circuit module 220 generates a corresponding energy-saving control signal according to the operational control instruction and sends the energy-saving control signal to the channel controllable link module 230 of AAU 110. As such, the channel controllable link module 230 performs energy-saving control on AAU 110 according to the energy-saving control signal. Thereby, smart energy-saving based on AI based beam forming algorithm can be achieved.

It should be noted that the energy-saving control signal includes a first channel energy-saving control signal, a second channel energy-saving control signal ... an n-1th channel energy-saving control signal, and an nth channel energy-saving control signal, and so on, where n is a positive integer, and this embodiment does not specifically limit this.

According to an embodiment of the present disclosure, a device for controlling energy-saving 210 is provided. As shown in FIG. 15, the device 210 includes but is not limited to:
a memory 214 configured to store a program; and
a processor 312 configured to execute the program stored in the memory 214, where when the processor 312 executes the computer program stored in the memory 214, the processor 312 is caused to perform any one of the methods for controlling energy-saving described above.

The processor 312 and the memory 214 may be connected by a bus or other means.

The memory 214, as a non-transient computer-readable storage medium, can be configured to store non-transitory software programs and non-transitory computer-executable programs, such as the method for controlling power saving as described in any one of the embodiments above in the present disclosure. The processor 312 executes the non-transitory software programs and instructions stored in the memory 214, such that the method for controlling power saving as described in any one of the embodiments above is carried out.

The memory 214 may include a program storage section and a data storage section, in which the program storage section may store an operating system and application programs for performing at least one operation, and data storage section may store program of the method for controlling power saving as described in any one of the embodiments above. In addition, the memory 214 can include high-speed random-access memory and non-transitory memory, such as at least one disk memory device, flash memory device, or other non-transitory solid-state memory devices. In some implementations, the memory 214 may include memories remotely located relative to the processor 312, and these remote memories may be connected to the processor 312 through a network. Examples of the above networks include, but are not limited to, the Internet, intranet, local area network, mobile communication network, and combinations thereof.

Non-transitory software programs and instructions of the method for controlling power saving described in the above embodiments are stored in a memory 214 which, when executed by at least one processor 312, cause the processor 312 to carry out operations of the method for controlling power saving as described in any one of the embodiments above, for example, the above-described operations S110 to S130 described in conjunction with FIG. 4, S210 to S220 described in conjunction with FIG. 5, S310 to S340 described in conjunction with FIG. 6, S410 to S420 described in conjunction with FIG. 7, S510 described in conjunction with FIG. 8, S610 described in conjunction with FIG. 9, S710 and S720 described in conjunction with FIG. 10, S810 and S820 described in conjunction with FIG. 11, or S910 and S920 described in conjunction with FIG. 12.

The above-described device embodiments or system embodiments are only illustrative, in which the units illustrated as separate components may or may not be physically separated, that is, they may be located in one place or distributed over several network units. Some or all modules can be selected according to the practical needs to achieve the purpose of this embodiment.

According to an embodiment, a computer-readable storage medium is provided. The computer-readable storage medium stores computer-executable instructions which, when executed by a processor or controller, for example, by a processor in the above-mentioned device embodiments, causes the processor to carry out the operations of the method for controlling power saving as described in any one of the embodiments above, for example, the above-described operations S110 to S130 described in conjunction with FIG. 4, S210 to S220 described in conjunction with FIG. 5, S310 to S340 described in conjunction with FIG. 6, S410 to S420 described in conjunction with FIG. 7, S510 described in conjunction with FIG. 8, S610 described in conjunction with FIG. 9, S710 and S720 described in conjunction with FIG. 10, S810 and S820 described in conjunction with FIG. 11, or S910 and S920 described in conjunction with FIG. 12.

According to an embodiment of the present disclosure, a computer program product is provided. The computer program product includes a computer program or a computer instruction stored in a computer-readable storage medium. A processor of a computer device can read the computer program or computer instruction from the computer-readable storage medium. The computer program or computer instruction which, when executed by the processor, causes the computer device to carry out the operations of the method for controlling power-saving as described in any one of the embodiments above, for example, the above-described operations S110 to S130 described in conjunction with FIG. 4, S210 to S220 described in conjunction with FIG. 5, S310 to S340 described in conjunction with FIG. 6, S410 to S420 described in conjunction with FIG. 7, S510 described in conjunction with FIG. 8, S610 described in conjunction with FIG. 9, S710 and S720 described in conjunction with FIG. 10, S810 and S820 described in conjunction with FIG. 11, or S910 and S920 described in conjunction with FIG. 12.

An embodiment of the present disclosure includes the following operations, acquiring antenna information of each channel in an Active Antenna Unit (AAU); performing energy-saving decision processing according to antenna beam forming information and a preset energy-saving strategy, in response to an inclusion of the antenna beam forming information within the antenna information, to acquire a first operational control instruction; and performing energy-saving control to the AAU, by means of the first operational control instruction. According to the scheme set forth in an embodiment of the present disclosure, the first operational control instruction is obtained by performing energy-saving decision processing according to antenna beam forming information and a preset energy-saving strategy. Then the energy saving control on AAU is performed by means of the first operational control instruction. That is, in contrast to the energy-saving mode of timing off some channels and the energy-saving mode of unified coarse tuning of channels in the related art, according to an embodiment of the present disclosure, the first operational control instruction adapted to the current situation is acquired based on the currently acquired antenna beam forming information, such that the AAU can perform energy-saving control according to the currently acquired antenna beam forming information. Therefore, the scheme according to an embodiment of the present disclosure can optimize existing energy-saving methods, reduce equipment operation energy consumption, and reduce the impact on service experience.

It shall be appreciated by a person having ordinary skills in the art that all or some of the steps and systems disclosed above can be implemented as software, firmware, hardware and their appropriate combinations. Some or all physical components can be implemented as software executed by a processor, such as a central processing unit, a digital signal processor or a microprocessor, or as hardware, or as an integrated circuit, such as an application specific integrated circuit. Such software can be distributed on computer-readable media, which can include computer storage media (or non-transitory media) and communication media (or transitory media). As is well known to a person having ordinary skills in the art, the term computer storage medium includes volatile and nonvolatile, removable and non-removable medium implemented in any method or technology for storing information such as computer readable instructions, data structures, program modules or other data. Computer storage medium includes, but is not limited to, RAM, ROM, EEPROM, flash memory or other memory technologies, CD-ROM, digital versatile disks (DVD) or other optical disk storage, magnetic boxes, tapes, magnetic disk storage or other magnetic storage devices, or any other medium that can be configured to store desired information and accessible by a computer. Furthermore, it is well known to a person having ordinary skills in the art that communication media usually contains computer-readable instructions, data structures, program modules or other data in modulated data signals such as carrier waves or other transmission mechanisms, and can include any information delivery media.

Described above is a description for several embodiments of the present disclosure, but the present disclosure is not limited to the above embodiments. A person having ordinary skills in the art can make various equivalent modifications or substitutions without departing the scope of the present disclosure, and these equivalent modifications or substitutions are within the scope defined by the claims of the present disclosure.

## Claims

1. A method for controlling energy-saving, comprising:
acquiring antenna information of each channel in an Active Antenna Unit (AAU);
performing energy-saving decision processing according to antenna beam forming information and a preset energy-saving strategy, in response to an inclusion of the antenna beam forming information within the antenna information, to acquire a first operational control instruction; and
performing energy-saving control to the AAU, by means of the first operational control instruction.

2. The method according to claim 1, wherein the preset energy-saving strategy is one of a plurality of preset energy-saving strategies, and performing the energy-saving decision processing according to the antenna beam forming information and the preset energy-saving strategy to acquire the first operational control instruction comprises:
determining a first candidate strategy among the plurality of preset energy-saving strategies according to the antenna beam forming information; and
acquiring the first operational control instruction according to the first candidate strategy.

3. The method according to claim 2, wherein the antenna beam forming information comprises antenna weight information; and determining the first candidate strategy among the plurality of preset energy-saving strategies according to the antenna beam forming information comprises:
calculating a channel power revision value of each channel in the AAU according to the antenna weight information;
determining the first candidate strategy among the plurality of preset energy-saving strategies according to the channel power revision value.

4. The method according to claim 3, wherein determining the first candidate strategy among the plurality of preset energy-saving strategies according to the channel power revision value comprises:
for each channel, acquiring a channel power control strategy from the preset energy-saving strategies in response to the channel power revision value of the respective channel being less than or equal to a channel power threshold, and determining the channel power control strategy as the first candidate strategy;
or,
for each channel, acquiring a channel optimizing control strategy from the preset energy-saving strategies in response to the channel power revision value of the respective channel being greater than a channel power threshold, and determining the channel optimizing control strategy as the first candidate strategy.

5. The method according to claim 1, wherein the preset energy-saving strategy is one of a plurality of preset energy-saving strategies, and performing the energy-saving decision processing according to the antenna beam forming information and the preset energy-saving strategy to acquire the first operational control instruction comprises:
acquiring a channel power revision value of each channel in the AAU according to the antenna beam forming information;
inputting each channel power revision value into an energy-saving decision model for decision processing, and acquiring a decision index corresponding to the respective channel power revision value;
determining a first candidate strategy among the plurality of preset energy-saving strategies according to the decision index; and
acquiring the first operational control instruction according to the first candidate strategy.

6. The method according to claim 1, wherein acquiring the antenna information of each channel in the AAU in response to the inclusion of the antenna beam forming information within the antenna information, comprises:
acquiring the antenna beam forming information of each channel in the AAU through a network management system;
or,
acquiring the antenna beam forming information of each channel in the AAU through a baseband processing unit (BBU).

7. The method according to claim 1, further comprising:
performing the energy-saving decision processing according to power configuration information of the AAU and the preset energy-saving strategy, in response to an inclusion of the power configuration information of the AAU within the antenna information, to acquire a second operational control instruction; and
performing energy-saving control to the AAU, by means of the second operational control instruction.

8. The method according to claim 7, wherein the preset energy-saving strategy is one of a plurality of preset energy-saving strategies, and performing energy-saving decision processing according to the power configuration information and the preset energy-saving strategy to acquire the second operational control instruction comprises:
determining a second candidate strategy among the plurality of preset energy-saving strategies according to the power configuration information; and
acquiring the second operational control instruction according to the second candidate strategy.

9. The method according to claim 8, wherein determining the second candidate strategy among the plurality of preset energy-saving strategies according to the power configuration information comprises:
determining an average power of each channel configured by the AAU according to the power configuration information; and
determining the second candidate strategy among the plurality of preset energy-saving strategies according to the average power.

10. The method according to claim 7, wherein acquiring the antenna information of each channel in the AAU in response to the inclusion of the power configuration information of the AAU within the antenna information, comprises:
acquiring the power configuration information of each channel in the AAU through the AAU;
or,
acquiring the power configuration information of each channel in the AAU through a BBU.

11. A device for controlling energy-saving, comprising: a data acquisition unit, and an energy-saving decision unit; wherein the data acquisition unit is configured to acquire antenna information of each channel in an Active Antenna Unit (AAU); and the energy-saving decision unit is configured to perform energy-saving decision processing according to antenna beam forming information and a preset energy-saving strategy in response to an inclusion of the antenna beam forming information within the antenna information, to acquire a first operational control instruction, and to perform energy-saving control to the AAU by means of the first operational control instruction; the data acquisition unit is arranged in one of a network management system, a Base Band Unit (BBU), or the AAU; and the energy-saving decision unit is arranged in one of the network management system, the BBU, or the AAU.

12. A device for controlling energy-saving, comprising a memory, a processor and a computer program stored in the memory and executable by the processor which, when executed by the processor causes the processor to carry out the method according to any one of claims 1 to 10.

13. A computer-readable storage medium storing a computer-executable instruction which, when executed by a processor, causes the processor to carry out the method as claimed in any one of claims 1 to 10.

14. A computer program product, comprising a computer program or a computer instruction stored in a computer-readable storage medium which, when executed by a processor of a computer device, causes the computer device to carry out the method according to any one of claims 1 to 10.
